# FASCICULE DE BREVET EUROPEEN

(11) **EP 3 849 825 B1**
(45) Date de publication et mention de la délivrance du brevet: **16.11.2022**
(21) Numéro de dépôt: 19762984.3
(22) Date de dépôt: 05.09.2019
(51) Int. Cl.: B60C 9/22, B60C 9/20

(54) **ARMATURE DE FRETTAGE D'UN PNEUMATIQUE POUR VEHICULE LOURD DE TYPE GENIE CIVIL**
UMREIFUNGSVERSTÄRKUNG FÜR EINEN REIFEN EINES SCHWERLASTBAUFAHRZEUGS
HOOPING REINFORCEMENT FOR A TYRE OF A HEAVY DUTY CIVIL ENGINEERING VEHICLE

(30) Priorité: 13.09.2018 FR 1858200
(43) Date de publication de la demande: 21.07.2021
(73) Titulaire: COMPAGNIE GENERALE DES ETABLISSEMENTS MICHELIN, 63000 Clermont-Ferrand (FR)
(72) Inventeur: LE CHENADEC, Elodie, 63040 CLERMONT-FERRAND Cedex 9 (FR); KHAYAT, Cédric, 63040 CLERMONT-FERRAND Cedex 9 (FR)
(74) Mandataire: Le Cam, Stéphane Georges Elie
(86) Numéro de dépôt international: PCT/EP2019/073739
(87) Numéro de publication internationale: WO 2020/053071

(56) Documents cités:
- WO-A1-2007/003551
- WO-A1-2014/048897
- WO-A1-2016/139348
- FR-A1- 2 759 945

## Description

La présente invention a pour objet un pneumatique radial, destiné à équiper un véhicule lourd de type génie civil, et concerne plus particulièrement l'armature de sommet d'un tel pneumatique.

Typiquement un pneumatique radial pour véhicule lourd de type génie civil, au sens de la norme de la European Tyre and Rim Technical Organisation ou ETRTO, est destiné à être monté sur une jante dont le diamètre est au moins égal à 25 pouces. Bien que non limitée à ce type d'application, l'invention est décrite pour un pneumatique radial de grande dimension, destiné à être monté sur un dumper, véhicule de transport de matériaux extraits de carrières ou de mines de surface, par l'intermédiaire d'une jante dont le diamètre est au moins égal à 49 pouces et peut atteindre 57 pouces, voire 63 pouces.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. La direction circonférentielle est tangente à la circonférence du pneumatique.

Dans ce qui suit, les expressions «radialement intérieur», respectivement «radialement extérieur» signifient «plus proche », respectivement «plus éloigné de l'axe de rotation du pneumatique». Par «axialement intérieur», respectivement «axialement extérieur», on entend «plus proche», respectivement «plus éloigné du plan équatorial du pneumatique», le plan équatorial du pneumatique étant le plan passant par le milieu de la surface de roulement et perpendiculaire à l'axe de rotation.

De façon générale un pneumatique comprend une bande de roulement, destinée à venir en contact avec un sol par l'intermédiaire d'une surface de roulement, dont les deux extrémités axiales sont reliées par l'intermédiaire de deux flancs à deux bourrelets assurant la liaison mécanique entre le pneumatique et la jante sur laquelle il est destiné à être monté.

Un pneumatique radial comprend en outre une armature de renforcement, constituée d'une armature de sommet, radialement intérieure à la bande de roulement, et d'une armature de carcasse, radialement intérieure à l'armature de sommet.

L'armature de carcasse d'un pneumatique radial pour véhicule lourd de type génie civil comprend habituellement au moins une couche de carcasse comprenant des renforts généralement métalliques, enrobés par un matériau polymérique de type élastomère ou élastomérique appelé mélange d'enrobage. Une couche de carcasse comprend une partie principale, reliant les deux bourrelets entre eux et s'enroulant généralement, dans chaque bourrelet, de l'intérieur vers l'extérieur du pneumatique autour d'un élément de renforcement circonférentiel le plus souvent métallique appelé tringle, pour former un retournement. Les renforts métalliques d'une couche de carcasse sont sensiblement parallèles entre eux et forment, avec la direction circonférentielle, un angle compris entre 85° et 95°.

L'armature de sommet d'un pneumatique radial pour véhicule lourd de type génie civil comprend une superposition de couches de sommet s'étendant circonférentiellement, radialement à l'extérieur de l'armature de carcasse. Chaque couche de sommet est constituée de renforts généralement métalliques, parallèles entre eux et enrobés par un matériau polymérique de type élastomère ou mélange d'enrobage.

Parmi les couches de sommet, on distingue usuellement les couches de protection, constitutives de l'armature de protection et radialement les plus à l'extérieur, et les couches de travail, constitutives de l'armature de travail et radialement comprises entre l'armature de protection et l'armature de carcasse.

L'armature de protection, comprenant au moins une couche de protection, protège essentiellement les couches de travail des agressions mécaniques ou physico-chimiques, susceptibles de se propager à travers la bande de roulement radialement vers l'intérieur du pneumatique.

L'armature de protection comprend souvent deux couches de protection, radialement superposées, formées de renforts métalliques élastiques, parallèles entre eux dans chaque couche et croisés d'une couche à la suivante, en formant, avec la direction circonférentielle, des angles au moins égaux à 10°.

L'armature de travail, comprenant au moins deux couches de travail, a pour fonction de ceinturer le pneumatique et de lui conférer de la rigidité et de la tenue de route. Elle reprend à la fois des sollicitations mécaniques de gonflage, générées par la pression de gonflage du pneumatique et transmises par l'armature de carcasse, et des sollicitations mécaniques de roulage, générées par le roulage du pneumatique sur un sol et transmises par la bande roulement. Elle doit en outre résister à l'oxydation et aux chocs et perforations, grâce à sa conception intrinsèque et à celle de l'armature de protection.

L'armature de travail comprend usuellement deux couches de travail, radialement superposées, formées de renforts métalliques non extensibles, parallèles entre eux dans chaque couche et croisés d'une couche à la suivante, en formant, avec la direction circonférentielle, des angles au moins égaux à 15° et au plus égaux à 60°, et, de préférence, au moins égaux à 15° et au plus égaux à 45°.

Pour diminuer les sollicitations mécaniques de gonflage transmises à l'armature de travail, il est connu de disposer, radialement à l'intérieur de l'armature de travail et radialement à l'extérieur de l'armature de carcasse, une armature de frettage. L'armature de frettage, dont la fonction est de reprendre au moins en partie les sollicitations mécaniques de gonflage, améliore l'endurance de l'armature de sommet par une rigidification de l'armature de sommet. L'armature de frettage peut également être radialement positionnée entre deux couches de travail de l'armature de travail, ou radialement à l'extérieur de l'armature de travail.

L'armature de frettage comprend au moins une couche de frettage et usuellement deux couches de frettage, radialement superposées, formées de renforts métalliques, parallèles entre eux, en formant, avec la direction circonférentielle, des angles au plus égaux à 2.5°, et, de préférence voisins de 0°.

En ce qui concerne les renforts métalliques, un renfort métallique est caractérisé mécaniquement par une courbe représentant la force de traction (en N), appliquée au renfort métallique, en fonction de son allongement relatif (en %), dite courbe force-allongement. De cette courbe force-allongement sont déduites des caractéristiques mécaniques en traction du renfort métallique, telles que l'allongement structural As (en %), l'allongement total à la rupture At (en %), la force à la rupture Fm (charge maximale en N) et la résistance à la rupture Rm (en MPa), ces caractéristiques étant mesurées selon la norme ISO 6892 de 1984.

L'allongement total à la rupture At du renfort métallique est, par définition, la somme de ses allongements structural, élastique et plastique (At = As + Ae + Ap). L'allongement structural As résulte du positionnement relatif des fils métalliques constitutifs du renfort métallique sous un faible effort de traction. L'allongement élastique Ae résulte de l'élasticité même du métal des fils métalliques, constituant le renfort métallique, pris individuellement, le comportement du métal suivant une loi de Hooke. L'allongement plastique Ap résulte de la plasticité, c'est-à-dire de la déformation irréversible, au-delà de la limite d'élasticité, du métal de ces fils métalliques pris individuellement. Ces différents allongements ainsi que leurs significations respectives, bien connus de l'homme du métier, sont décrits, par exemple, dans les documents US5843583, WO2005/014925 et WO2007/090603.

On définit également, en tout point de la courbe force-allongement d'un renfort métallique, un module en extension, exprimé en GPa, qui représente la pente de la droite tangente à la courbe force-allongement en ce point. En particulier, on appelle module élastique en extension ou module d'Young, le module en extension de la partie linéaire élastique de la courbe force-allongement.

Parmi les renforts métalliques, on distingue usuellement les renforts métalliques élastiques, tels que ceux utilisés dans les couches de protection, et les renforts métalliques non extensibles ou inextensibles, tels que ceux utilisés dans les couches de travail.

Un renfort métallique élastique est caractérisé par un allongement structural As au moins égal à 1% et un allongement total à rupture At au moins égal à 4%. En outre, un renfort métallique élastique a un module élastique en extension au plus égal à 150 GPa, et compris usuellement entre 40 GPa et 150 GPa.

Un renfort métallique non extensible est caractérisé par un allongement total At, sous une force de traction égale 10% de la force à rupture Fm, au plus égal à 0.2%. Par ailleurs, un renfort métallique non extensible a un module élastique en extension compris usuellement entre 150 GPa et 200 GPa.

Les renforts métalliques sont enrobés dans un mélange élastomérique. Pour caractériser la couche composite, il est usuel de décrire les propriétés mécaniques du mélange d'enrobage.

Un mélange élastomérique peut être caractérisé mécaniquement, en particulier après cuisson, par ses propriétés dynamiques, telles qu'un module de cisaillement dynamique G^{∗}= (G'²+G"²)^{1/2}, où G' est le module de cisaillement élastique et G" le module de cisaillement visqueux, et une perte dynamique tgδ=G"/G'. Le module de cisaillement dynamique G^{∗} et la perte dynamique tgδ sont mesurés sur un viscoanalyseur de type Metravib VA4000, selon la norme ASTM D 5992-96. On enregistre la réponse d'un échantillon de mélange élastomérique vulcanisé, ayant la forme d'une éprouvette cylindrique de 4 mm d'épaisseur et de 400 mm² de section, soumis à une sollicitation sinusoïdale en cisaillement simple alterné, à la fréquence de 10Hz, avec un balayage en amplitude de déformation de 0,1% à 50% (cycle aller), puis de 50% à 0,1% (cycle retour), et à une température donnée, par exemple égale à 60 °C. Ces propriétés dynamiques sont ainsi mesurées pour une fréquence égale à 10 Hz, une déformation égale à 50% de l'amplitude de déformation crête-crête et une température pouvant être égale à 60°C ou 100°C.

Un mélange élastomérique peut également être caractérisé par des propriétés mécaniques statiques. Les essais de traction permettent de déterminer les contraintes d'élasticité et les propriétés à la rupture. Sauf indication différente, ils sont effectués conformément à la norme française N F T 46-002 de septembre 1988. On mesure en seconde élongation (i.e. après un cycle d'accommodation) les modules sécants dits "nominaux" (ou contraintes apparentes, en MPa) à 10% d'allongement (noté "MA10") et 100% d'allongement ("MA100"). Toutes ces mesures de traction sont effectuées dans les conditions normales de température (23±2°C) et d'hygrométrie (50±5% d'humidité relative), selon la norme française NF T 40-101 (décembre 1979). On mesure également les contraintes à la rupture (en MPa) et les allongements à la rupture (en %), à une température de 23°C.

Le document WO 2016139348 décrit une architecture de pneumatique pour véhicule lourd de génie civil telle que précédemment décrite et comprenant une armature de frettage formée par un enroulement circonférentiel d'une nappe comprenant des renforts métalliques élastiques circonférentiels faisant, avec la direction circonférentielle des angles au plus égaux à 2.5°, ledit enroulement circonférentiel de la nappe s'étendant depuis une première extrémité circonférentielle jusqu'à une deuxième extrémité circonférentielle radialement extérieure à la première extrémité circonférentielle, de façon à former un empilement radial d'au moins deux couches de frettage, l'armature de frettage étant radialement positionnée entre les deux couches de travail d'une armature de travail.

Lors de la fabrication d'un pneumatique tel que décrit par le document WO 2016139348, la couche de frettage est en réalité une nappe comprenant des renforts métalliques élastiques, dite nappe de renforts métalliques, est initialement stockée sur un rouleau. Puis elle est déroulée et posée par enroulement circonférentiel radialement à l'extérieur des couches de pneumatique déjà empilées radialement. La nappe de renforts métalliques est enroulée sur au moins deux tours de façon à réaliser au moins deux couches de frettage radialement superposées, avec un décalage circonférentiel entre l'extrémité de départ de l'enroulement et l'extrémité de fin de l'enroulement de telle sorte que, sur une distance circonférentielle limitée, ou longueur de recouvrement, l'armature de frettage comprend trois couches de frettage. L'enroulement est réalisé de façon continue en utilisant une unique portion de nappe de renforts métalliques. Ainsi l'armature de frettage ne contient aucune discontinuité. Il s'ensuit qu'il peut subsister une portion de nappe de renforts métalliques, sur le rouleau de stockage initial, inutilisable dès lors qu'elle n'a pas une longueur suffisante pour la réalisation de l'armature de frettage en un seul morceau. Cette portion résiduelle de nappe de renforts métalliques, inutilisable en fabrication pour cause de longueur insuffisante, est également appelée chute de nappe. L'existence de telles chutes de nappes, qui entraîne une perte de matière, pénalise le coût de fabrication du pneumatique.

Une solution alternative pour éviter la perte de matière liée au recouvrement des extrémités des nappes ou aux chutes, est de réaliser une soudure dite bout à bout. Le raccord de ces chutes se fait en rapprochant les extrémités des deux portions à raccorder. L'espace entre ces deux extrémités est une discontinuité qui est remplie d'un mélange élastomérique de liaison qui solidarise par soudure les deux portions de nappe de renforts métalliques. On parle ici de soudure bout à bout en ce sens qu'il n'y a pas de recouvrement entre les deux portions de nappe.

En réalité, que ce soit le recouvrement des extrémités de couches de frettage, ou la soudure bout à bout, ces solutions sont néfastes pour l'uniformité du pneumatique. Les deux solutions sont à l'origine de surépaisseurs locales qui dégradent le fonctionnement du pneumatique par l'apparition de rebonds lors du roulage du pneumatique. Le coût de fabrication est également impacté négativement par la perte de matière occasionnée.

Les surépaisseurs des produits ont également des impacts négatifs sur l'endurance du pneumatique par l'augmentation de la température de fonctionnement.

Le document WO 2007003551A1 traite de l'endurance de pneumatiques. Une solution proposée dans ce document consiste à rajouter dans chaque épaule au moins une couche d'éléments de renforcement parallèles entre eux dans la couche additionnelle et orientée circonférentiellement.

Le document FR2759945A1 traite de l'endurance de pneumatiques de type « poidslourds », et propose une solution avec là encore des nappes additionnelles formées de renforts parallèles entre eux, orientés circonférentiellement et rajoutées au sommet.

Les inventeurs se sont donnés pour objectif d'améliorer l'endurance du pneumatique en optimisant l'armature de frettage pour diminuer la masse et donc pour baisser sa température de fonctionnement.

Cet objectif a été atteint par un pneumatique pour véhicule lourd de type génie civil comprenant :
- une armature de sommet radialement intérieure à une bande de roulement, et radialement extérieure à une armature de carcasse;
- l'armature de sommet comprenant une armature de protection, une armature de travail, et une armature de frettage;
- l'armature de protection la plus radialement extérieure dans l'armature de sommet comprenant au moins une couche de protection qui est contient des renforts métalliques formant, avec une direction circonférentielle tangente à la circonférence du pneumatique, un angle au moins égal à 10°;
- l'armature de travail comprenant au moins deux couches de travail qui contient chacun des renforts métalliques formant, avec une direction circonférentielle du pneumatique, un angle au moins égal à 15° et au plus égal à 45°et croisés d'une couche de travail à la suivante ;
- ladite armature de travail ayant une largeur axiale LT égale à la largeur axiale de la couche de travail la plus large ;
- l'armature de frettage comprenant au moins deux couches de frettage radialement superposées, comprenant chacune des renforts métalliques qui font avec la direction circonférentielle, un angle au plus égal à 2.5°, et sont enrobés dans un mélange élastomérique ;
- ladite armature de de frettage comprenant une première couche de frettage axialement continue et une deuxième couche de frettage axialement discontinue ;
- la première couche de frettage ayant une largeur axiale LF1 au moins égale à 25% et au plus égale à 75% de la largeur axiale LT de l'armature de travail ;
- la deuxième couche de frettage discontinue étant constituée de deux bandes de frettage symétriques par rapport à un plan équatorial du pneumatique passant par le milieu de la bande de roulement et perpendiculaire à l'axe de rotation dudit pneumatique ;
- chaque bande de frettage s'étendant axialement depuis une extrémité axialement intérieure jusqu'à une extrémité axialement extérieure sur une largeur axiale LF2 au moins égale à 10% et au plus égale à 35% de la largeur axiale LF1 de la première couche de frettage;
- la tension répartie à rupture TR de chaque bande de frettage, définie comme le produit du nombre D de renforts par mm par la force à rupture FR de chaque renfort exprimée en daN, étant au moins égale à 100 daN/mm.

L'idée principale de l'invention est d'avoir un frettage optimisé qui, tout en répondant aux fonctions mécaniques attendues, ne dégrade pas le coût économique de fabrication du pneumatique.

Le frettage doit permettre au pneumatique :
- D'amortir les chocs et de réduire la profondeur des coupures de la bande de roulement lorsque le pneumatique roule sur des grosses pierres ;
- De remplacer les solutions d'architecture de l'état de l'art, telles que décrites, par exemple, dans les documents WO 2014048897, et WO 2014095957, dans lesquels le sommet est renforcé avec des couches étroites comprenant des renforts faisant des angles compris entre 6° et 12°, par rapport à la direction circonférentielle. Par couches étroites de frettage, on entend des couches dont la largeur axiale est inférieure à 0.6 fois la largeur de la couche de travail la plus radialement interne. Le remplacement des couches croisées de ces solutions classiques par des couches de frettage permet d'éliminer les cisaillements dans le plan méridien qui séparent en deux ces couches croisées lorsque le pneumatique est en roulage sous très fortes charges.
- D'améliorer l'endurance du bloc sommet en augmentant les angles que font les renforts des couches de travail avec la direction circonférentielle
- De réduire le coût de matière des pneumatiques par rapport à des solutions sans frettage.

Les inventeurs ont observé que l'armature de frettage remplit ces fonctions même si elle est réduite à une première couche de frettage axialement continue et une deuxième couche de frettage axialement discontinue. Une deuxième couche de frettage discontinue signifie que la couche est limitée à une portion de la largeur axiale du sommet comprise environ entre 20 mm et 100 mm. La partie centrale de la deuxième couche de frettage sous le sommet est donc supprimée pour améliorer le coût de revient du pneumatique, sans dégradation de ses performances. L'idée est de fretter l'épaule du pneumatique comprise entre chaque flanc et la bande de roulement pour limiter les déformations aux extrémités libres des couches du sommet. La nature des renforts et la gomme d'enrobage des renforts doivent être appropriées pour obtenir un frettage suffisant à l'épaule.

Selon l'invention, la première couche de frettage a une largeur axiale LF1 au moins égale à 25% et au plus égale à 75% de la largeur axiale LT de l'armature de travail, et la deuxième couche de frettage discontinue est constituée de deux bandes de frettage symétriques par rapport à un plan équatorial du pneumatique passant par le milieu de la bande de roulement et perpendiculaire à l'axe de rotation dudit pneumatique.

La largeur de la première couche de frettage est exprimée en fonction de la largeur de la première couche de travail qui elle-même dépend de la largeur nominale du pneumatique. Il s'agit de définir la largeur utile de la première couche de frettage pour assurer un fonctionnement correct de l'invention. Par exemple, sur une dimension pneumatique telle que 59/80R63, les largeurs de la première couche de travail et de frettage sont respectivement de 1034 mm, et de 520 mm. Sur une autre dimension plus petite telle que 40.00R57, les largeurs de la première couche de travail et de frettage sont respectivement de 728 mm, et de 360 mm. L'invention peut donc se décliner sur toute une famille de dimensions comme par exemple, de la dimension 59/80R63 à la dimension 40.00/R57.

Encore selon l'invention, chaque bande de frettage s'étend axialement depuis une extrémité axialement intérieure jusqu'à une extrémité axialement extérieure sur une largeur axiale LF2 qui est au moins égale à 10% et au plus égale à 35% de la largeur axiale LF1 de la première couche de frettage ;

La largeur LF2 de la bande de frettage doit être adaptée à chaque dimension pneumatique. Cette largeur dépend de la densité de renforts de la couche de frettage, ainsi que de la force de rupture du renfort. Pour une même dimension pneumatique donnée, la densité de renforts le, et donc la largeur LF2, est d'autant plus grande que la force de rupture du renfort est faible.

Sur une dimension telle que 40.00/R57, la largeur de la bande de frettage doit être égale au moins à 90 mm, alors que sur une dimension plus grande telle que 59/80R63, la largeur de la bande de frettage est de 65 mm.

Dans l'état de l'art, tel que décrit par exemple dans la demande de brevet FR3044593A1, les deux couches de frettages sont obtenues par un enroulement circonférentiel d'au moins deux tours d'une nappe radialement à l'extérieur de la première couche de travail. La distance circonférentielle entre les première et deuxième extrémités circonférentielles de l'armature de frettage, qui se recouvrent, est au moins égale à 0.6 m et plus égale à 1.2 m. Dans la zone de recouvrement délimitée par les première et deuxième extrémités circonférentielles de l'armature de frettage, l'armature de frettage comprend donc trois couches de frettage, et en dehors de cette zone, elle n'en comprend que deux. Cette différence d'épaisseurs dans la direction radiale provoque des défauts d'uniformité pénalisants pour l'utilisation du pneumatique. Ces défauts d'uniformité se traduisent par des faux ronds et des effets de rebonds du pneumatique en roulage.

La solution proposée par les inventeurs limite la deuxième couche de frettage uniquement aux extrémités axiales de l'armature de frettage sur une distance LF2 de 20 mm à 100 mm. Ainsi, contrairement à l'état de l'art, la zone de recouvrement des deux bandes frettage s'étend seulement sur la largeur LF2, au lieu d'un étalement sur toute la largeur du sommet. Il s'ensuit une amélioration de l'uniformité du pneumatique par rapport aux critères de faux ronds et de rebonds.

Les deux bandes de la deuxième couche de frettage apportent de la rigidité au sommet au niveau des épaules du pneumatique. Les inventeurs ont observé que la tension reprise par l'armature de frettage dans la zone centrale du sommet est très faible par rapport à la reprise de tension dans les nappes aux épaules du pneumatique. Ainsi, en supprimant la partie centrale de la deuxième couche de frettage, les avantages sont cumulés, à savoir l'amélioration de l'uniformité et la réduction de la masse du pneumatique et donc son coût de revient industriel sans impacter les performances d'endurance.

En outre, pour un bon fonctionnement del'armature de frettage, la tension répartie à rupture TR de chaque bande de frettage, définie comme le produit du nombre D de renforts par millimètre par la force à rupture FR de chaque renfort exprimée en daN, est au moins égale à 100 daN/mm.

Les inventeurs proposent un dimensionnement approprié de la couche de frettage discontinue pour un fonctionnement correct de l'invention. La tension répartie dans la direction circonférentielle au moins égale à 100 daN/mm garantit un niveau de rigidité suffisant aux extrémités de l'armature de sommet pour limiter les déformations.

Les inventeurs proposent, par exemple, des câbles multi-torons de structure 1xN comprenant une unique couche de N torons enroulés en hélice, chaque toron comprenant une couche interne de M fils internes enroulés en hélice et une couche externe de P fils externes enroulés en hélice autour de la couche interne.

Selon un premier mode de réalisation des câbles multi-torons, N=3 ou N=4, de préférence N=4. Préférentiellement, le renfort est défini avec 4 torons, mais l'option avec 3 torons est également convenable.

Selon un deuxième mode de réalisation des câbles multi-torons, M=3, 4 ou 5, de préférence M=3.

Selon un troisième mode de réalisation des câbles multi-torons, dans lequel P=7, 8, 9, 10 ou 11, de préférence P=8.

Ces renforts sont conçus pour obtenir de forts allongements sous de faibles charges en sollicitations d'extension. Le choix préférentiel conduit à des renforts du type : 4×(3+8)×0.35, soit des câbles comprenant 44 fils avec un diamètre unitaire de chaque fil égal à 35 centième de millimètre. L'utilisation de tels renforts améliorent l'endurance des pneumatiques en augmentant la résistance aux efforts de traction lors du passage sur des obstacles.

L'invention ne se limite pas aux renforts précédemment étudiés. D'autres assemblages sont possibles comme par exemple le câble 3×(1+6)×0.28, ayant 21 fils de diamètre unitaire égal à 28 centièmes de millimètres. Un tel câble a un diamètre de 1.9 mm et une force de rupture de 250 daN.

Avantageusement, l'armature de frettage est radialement positionnée à l'intérieur de l'armature de protection.

Par conception, l'armature de protection se positionne radialement à l'intérieur de la bande de roulement et en contact avec elle. Dans le cas d'un pneumatique pour un véhicule lourd de type génie civil destiné à rouler sur des sols accidentés, la présence d'une armature de protection comprenant au moins une couche de protection est avantageuse. Elle protège essentiellement les couches de travail des agressions mécaniques ou physico-chimiques, susceptibles de se propager à travers la bande de roulement radialement vers l'intérieur du pneumatique. Dans le cas de couches de protection multiples, il est avantageux que les renforts soient croisés d'une couche à la suivante.

Préférentiellement, la première couche de frettage est positionnée radialement à l'extérieur de la couche de travail la plus radialement intérieure, et la deuxième couche de frettage est positionnée radialement à l'extérieur de la première couche de frettage et en contact avec elle.

Les inventeurs ont mis en évidence que le positionnement radial de l'armature de frettage dans l'armature de sommet dépend des effets mécaniques recherchés. L'armature de sommet est un empilement de couches formées de renforts métalliques enrobés dans un mélange élastomérique. Mécaniquement, l'armature de sommet peut être assimilée à une poutre multicouche ayant des rigidités de flexion qui dépendent des modules élastiques en extension des renforts utilisées dans les couches, ainsi que des épaisseurs de chaque couche. Le pneumatique gonflé, monté sur sa jante, est écrasé par la charge portée. La déformation du pneumatique due à son écrasement par la charge portée dépend de la distribution des rigidités et des épaisseurs des couches de travail autour de la fibre neutre. Le positionnement de l'armature de frettage vise à faciliter la mise à plat du pneumatique en diminuant les déformations aux extrémités des couches du sommet.

Une réalisation préférée de l'invention consiste donc à positionner l'armature de frettage à l'intérieur de l'armature de travail, c'est-à-dire que la première couche de frettage est posée sur la première couche de travail et les deux bandes de frettage sont ensuite posées sur ladite première couche de frettage.

En effet, une telle architecture permet, grâce à l'utilisation de renforts circonférentiels, situés près de la fibre neutre du sommet, de limiter la déformation du sommet aux épaules du pneumatique. Ceci permet donc d'obtenir à la fois une bonne performance d'endurance vis-àvis du clivage du sommet et une bonne performance de résistance aux chocs grâce à un sommet souple au centre, donc apte à supporter la déformation due aux chocs lorsque le véhicule roule sur des obstacles. En effet, lors du franchissement d'un obstacle, le sommet du pneumatique fonctionne comme une poutre dont la fibre neutre se situe entre les couches de travail selon un mode de déformation imposée. La fibre neutre en flexion de l'armature de sommet se situe entre les couches de sommet les plus rigides, à savoir entre les couches de travail. En positionnant les renforts circonférentiels entre ces dites couches de les couches travail, la solution minimise les contraintes et les déformations de flexion associées à cette sollicitation que doivent supporter les renforts circonférentiels.

Dans un deuxième mode de réalisation de l'invention, la deuxième couche de frettage est positionnée radialement à l'extérieur de la deuxième couche de travail et en contact avec elle.

Dans ce mode de réalisation, la première couche de frettage est posée sur l'armature de carcasse sur une largeur axiale LF1. La deuxième couche de frettage, formée de deux bandes d'une largeur de 30 mm à 100 mm, est posée sur la deuxième couche de travail et n'est donc pas en contact avec ladite première couche de frettage.

Dans un troisième mode de réalisation, la deuxième couche de frettage est positionnée radialement à l'extérieur de l'armature de carcasse et en contact avec elle.

Pour certaines dimensions pneumatiques, en fonction du choix des renforts des couches du sommet, et de leurs épaisseurs, il peut être avantageux d'avoir les bandes de frettage posées directement sur l'armature de carcasse. Dans ce cas-là, la couche de frettage continue est posée sur la première couche de travail.

Lors de la fabrication de l'armature de frettage, on peut utiliser soit des nappes découpées directement à la largeur désirée, ou soit encore des bandelettes d'une largeur de 35 mm à 252 mm, formés de renforts métalliques enrobés dans un mélange élastomérique, et posées de façon jointive jusqu'à obtention de la largeur désirée.

Selon un mode de réalisation avantageux de l'invention, la première couche de frettage est constituée par un enroulement circonférentiel d'une nappe de renforts métalliques.

La nappe de renforts métalliques est initialement stockée sur un rouleau. Puis elle est déroulée et posée par enroulement circonférentiel radialement à l'extérieur des couches de pneumatique déjà empilées radialement. La nappe de renforts métalliques est enroulée sur un tour complet de façon à réaliser une couche de frettage continue. L'extrémité de départ de l'enroulement et l'extrémité de fin de l'enroulement sont décalées de telle sorte que l'armature de frettage comprend deux couches de frettage que sur une distance circonférentielle limitée, ou longueur de recouvrement. La longueur de recouvrement varie de 0.6 m à 1.2 m.

Selon un autre mode de réalisation de l'invention, il est avantageux que chaque bande de frettage de la deuxième couche de frettage soit constituée par un enroulement circonférentiel d'une nappe de renforts métalliques.

Pour la seconde couche de frettage, une nappe de frettage est découpée à une largeur égale à celle de la bande de frettage. La longueur de la nappe découpée est telle que l'on puisse faire un tour circonférentiel complet autour des couches déjà radialement empilées, avec un recouvrement d'une longueur de 0.6 à 1.2 m de l'extrémité de départ. Afin de limiter l'impact sur l'uniformité du pneumatique, les zones de recouvrement de la première et de la deuxième couches de frettage sont décalées dans la direction circonférentielle.

Dans un autre mode de réalisation de l'invention, la première couche de frettage est constituée par une juxtaposition axiale de spires jointives d'une bandelette, enroulées circonférentiellement, ladite bandelette comprenant au moins 8 et au plus 30 renforts métalliques consécutifs, parallèles entre eux et enrobés dans un mélange élastomérique.

La première couche de frettage est alors obtenue par un enroulement hélicoïdal jointif, dans la direction axiale, d'une bandelette, radialement à l'extérieur des couches du pneumatique déjà empilées radialement. L'avantage de ce mode de réalisation réside dans l'absence de zone de recouvrement qui entraîne une surépaisseur locale dommageable pour l'uniformité du pneumatique.

Chaque bande de la deuxième couche de frettage est également avantageusement constituée par une juxtaposition axiale de spires jointives d'une bandelette, enroulées circonférentiellement, ladite bandelette comprenant au moins 8 et au plus 30 renforts métalliques consécutifs, parallèles entre eux et enrobés dans un mélange élastomérique.

Pour cette réalisation de l'invention, chaque bande de la deuxième couche de frettage est réalisée par l'enroulement de spires jointives d'une bandelette sur une longueur égale à la largeur LF2 de la bande. De cette façon, la zone délimitée par les deux extrémités axialement intérieures des deux bandes constitue une zone sans frettage. Dans ce mode de réalisation, il n'existe pas non plus de recouvrement de l'extrémité de départ de la bande de frettage.

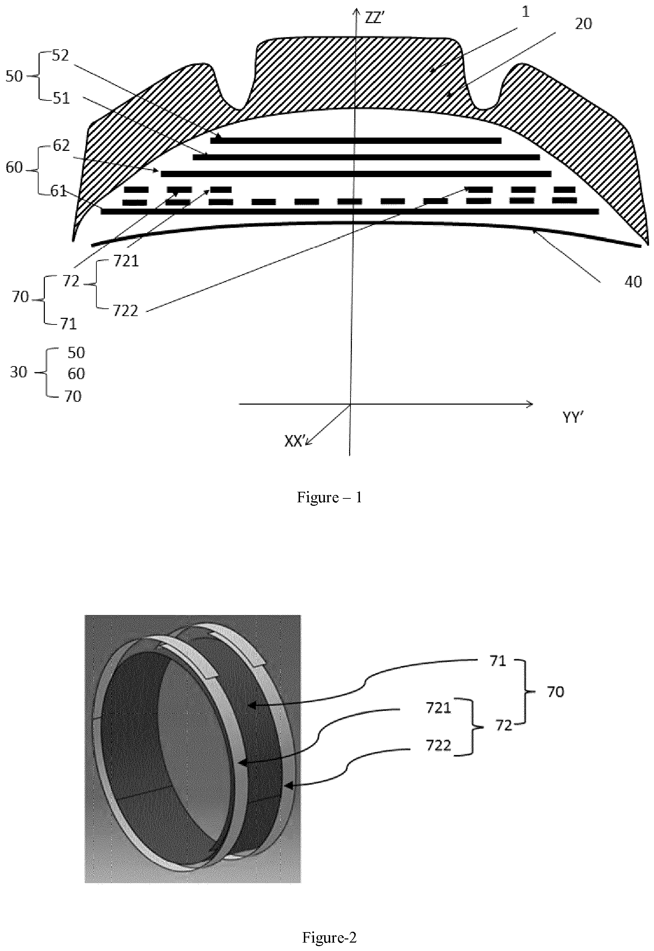

L'invention est illustrée par les figures 1 à 8, non représentées à l'échelle pour en faciliter la compréhension.

La figure 1 représente une coupe méridienne du sommet d'un pneumatique 1 selon l'invention comprenant :
- Une armature de carcasse 40 constituée par une seule couche de carcasse dont les renforts forment un angle proche de 90°, c'est-à-dire compris entre [85°, 95°], avec la direction circonférentielle XX ;
- Une armature de travail 60, radialement extérieure à l'armature de carcasse 40, comprenant deux couches de travail 61 et 62. La couche de travail 61 radialement la plus intérieure a une largeur axiale LT supérieure à celle de la deuxième couche de travail 62 ;
- Une armature de protection 50, radialement extérieure à l'armature de travail 60 et radialement intérieure à la bande de roulement 20, comprenant deux couches de protection 51, et 52;
- Une armature de frettage 70 comprenant une première couche 71 continue s'étendant sur une largeur axiale LF1. et une deuxième couche discontinue formée de deux bandes 721 et 722, ayant chacune une largeur axiale LF2 Dans le cas représenté, l'armature de frettage 70 est radialement positionnée entre les deux couches de travail (61, 62) ;
- Une bande de roulement 20 ;
- Les armatures de travail 60, de protection 50 et de frettage 70 constituant l'armature de sommet 30.

La figure 2 représente une vue en perspective de l'armature de frettage 70, objet de l'invention, avec une première couche de frettage 71, continue, et une deuxième couche de frettage discontinue, composée de deux bandes 721, 722, symétriques par rapport au plan équatorial qui passe par le centre du pneumatique.

La figure 3 représente une coupe méridienne du sommet d'un pneumatique selon l'invention avec la cotation des dimensions caractéristiques de l'invention :
- La largeur axiale LF1 est la mesure de la largeur axiale de la première couche de frettage. Ladite largeur axiale s'exprime proportionnellement à celle de la première couche de travail LT (non représentée) ;
- La deuxième couche de frettage comprenant deux bandes de frettage 721 et 722, symétriques par rapport au plan équatorial , la bande 721 (respectivement 722) ayant une première extrémité axialement extérieure E721 (respectivement E722), et une deuxième extrémité axialement intérieure I721 (respectivement I722), la largeur axiale de la bande de frettage LF2 est la distance axiale entre les extrémités E721 et I721. La largeur axiale DF2 mesure la distance entre les extrémités axialement intérieures I721 et I722 respectives des deux bandes de frettage 71 et 72 et donc la largeur axiale de la discontinuité.

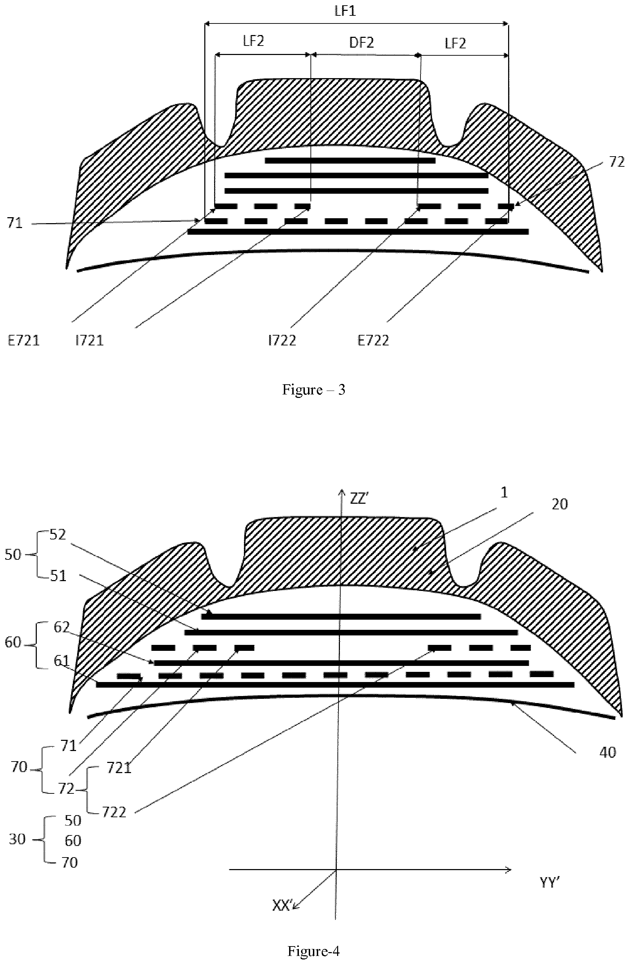

La figure 4 représente une coupe méridienne du sommet d'un pneumatique selon l'invention selon un mode de réalisation de l'invention dans lequel la première couche de frettage 71 est radialement extérieure à la première couche de travail 61. Les deux bandes de frettage (721 ; 722) qui forment la couche 72 sont radialement extérieures à la deuxième couche de travail 62.

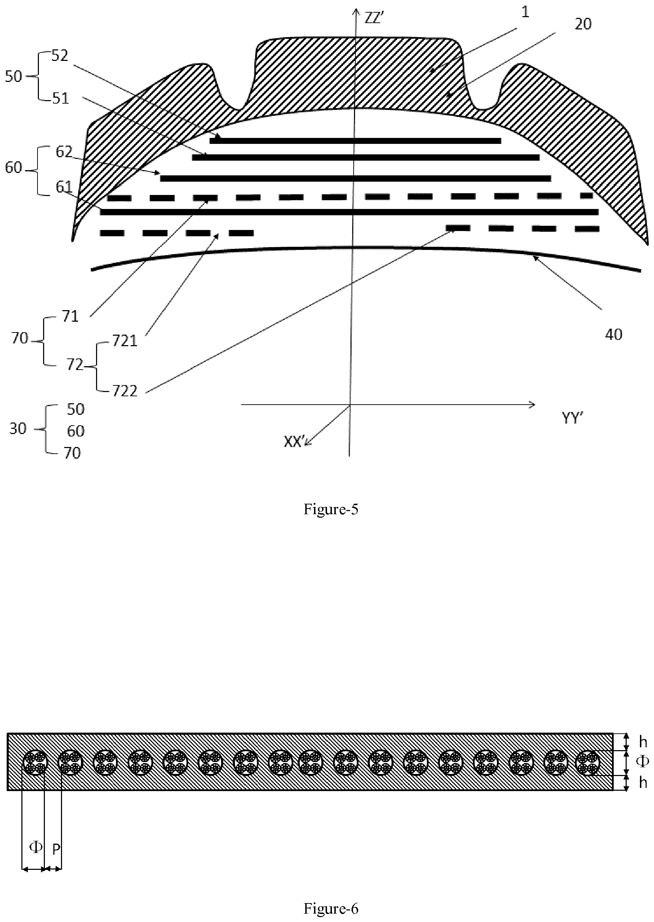

La figure 5 représente une coupe méridienne du sommet d'un pneumatique selon l'invention selon un autre de réalisation de l'invention dans lequel les deux bandes de frettage (721 ; 722) sont radialement extérieure à l'armature de carcasse 40. La couche de frettage 71 est quant à elle, radialement extérieure à la première couche de travail 61.

La figure 6 représente une couche de frettage avec des renforts ayant un diamètre Φ, pouvant varier entre 1.9 mm et 3.8 mm, répartis selon un pas P et enrobés dans une gomme d'enrobage d'épaisseur h au dos du renfort supérieure ou égale à 0.6 mm.

Une couche de frettage de l'armature de sommet du pneumatique est obtenue soit par l'enroulement circonférentiel d'une nappe telle que représentée sur la figure 6, soit par une juxtaposition axiale de spires jointives d'une bandelette, enroulées circonférentiellement, ladite bandelette comprenant au moins 8 et au plus 30 renforts métalliques consécutifs, parallèles entre eux et enrobés dans un mélange élastomérique.

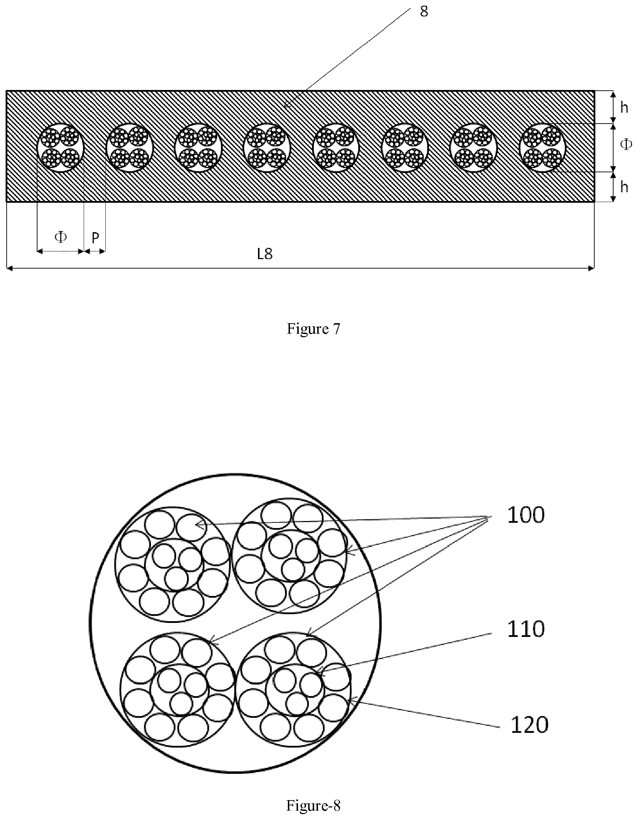

La figure 7 représente une bandelette 8 telle que décrite précédemment comprenant 8 renforts métalliques consécutifs, parallèles entre eux et enrobés dans un mélange élastomérique.

La largeur L8 de la bandelette dépend du diamètre Φ de renfort, et du pas P entre deux renforts consécutifs. Typiquement la largeur L8 est définie pour un nombre de renforts allant de 8 à 30, avec un pas P pouvant varier de 2.5 mm à 4.4 mm. La largeur L8 de la bandelette peut varier de 35 mm à 252 mm.

La figure 8 représente un renfort de la couche de frettage. Ledit renfort est un assemblage de 4 torons 100, composés chacun d'une couche interne 110 de 3 filset d'une couche externe 120 de 8 fils.

L'invention a été réalisée sur un pneumatique pour véhicule lourd de génie civil de dimension 59/80R63. Le pneumatique de l'invention diffère du pneumatique de l'état de référence par l'armature de frettage. Pour le pneumatique de référence, l'armature de frettage est obtenue par l'enroulement circonférentiel d'une nappe radialement à l'extérieur de la première couche de travail 61, s'étendant depuis une première extrémité circonférentielle jusqu'à une deuxième extrémité circonférentielle, de façon à former un empilement radial d'au moins deux couches de frettage. Pour l'invention, le pneumatique est fabriqué conformément à la figure 1, où la deuxième couche de frettage est formée des deux bandes de frettage 721 et 722, telle que représentée sur la figure 2. Les extrémités axialement intérieures des deux bandes de frettage sont distantes d'une longueur DF2.

Pour la dimension 59/80R63 étudiée, les caractéristiques géométriques de l'armature de frettage sont présentées dans le tableau 1 suivant :

**Tableau 1**

| Largeur axiale LT de la 1^{ère} couche de travail (mm) | Largeur axiale LF1 de la 1^{ère} couche de frettage (mm) | Largeur axiale LF2 de chaque bande de frettage de la 2^{ème} couche de frettage (mm) | Distance axiale DF2 entre les deux bandes de frettage de la 2^{ème} couche de frettage (mm) |
|---|---|---|---|
| 1034 | 520 | 65 | 390 |

Les calculs de simulation du pneumatique en roulage ont été réalisés sur la dimension 59/80R63 pour une charge portée de 104 tonnes, avec une pression de gonflage de 7 bars. En outre, le pneumatique était soumis à une force de dérive de 26 tonnes.

Les résultats de calculs par la méthode des éléments finis montrent que les déformations de cisaillements dans les plans méridien et circonférentiel sont du même ordre de grandeur pour les pneumatiques de référence et de l'invention :

**Tableau 2**

| | Amplitude maximale du cisaillement dans le plan méridien | Amplitude maximale du cisaillement dans le plan circonférentiel |
|---|---|---|
| Référence : Pneumatique avec les deux couches de frettage continues sur toute la largeur du sommet | 0.8 | 0.27 |
| Pneumatique de l'invention : deuxième couche de frettage discontinue | 0.81 | 0.27 |

Ce résultat confirme que l'absence de frettage au centre de la bande de roulement n'affecte pas l'endurance du pneumatique.

Le pneumatique fabriqué selon l'invention a une masse inférieure à celle du pneumatique de référence, comme illustré dans le tableau suivant :

**Tableau 3**

| | Masse en base 100 |
|---|---|
| Référence : Pneumatique avec les deux couches de frettage continues sur toute la largeur du sommet | 100 |
| Pneumatique de l'invention : deuxième couche de frettage discontinue | 155 |

La masse de l'armature de frettage est de 55% inférieure à celle du pneumatique de référence.

La suppression de la couche de frettage sur une distance DF2 de 390 mm a également amélioré la thermique du pneumatique. Dans le plan équatorial qui passe par le centre du pneumatique, au-dessus de la deuxième couche de protection, la température a chuté de 5°.

## Revendications

1. - Pneumatique (1) pour véhicule lourd de type génie civil comprenant :
- une armature de sommet (30), radialement intérieure à une bande de roulement (20) et radialement extérieure à une armature de carcasse (40) ;
- l'armature de sommet (30) comprenant une armature de protection (50), une armature de travail (60) et une armature de frettage (70) ;
- l'armature de protection (50), la plus radialement extérieure dans l'armature de sommet (30), comprenant au moins une couche de protection (51, 52), la couche de protection (51, 52) comprenant des renforts métalliques formant, avec une direction circonférentielle (XX') tangente à la circonférence du pneumatique, un angle au moins égal à 10° ;
- l'armature de travail (60) comprenant au moins deux couches de travail (61, 62), chaque couche de travail (61, 62) comprenant des renforts métalliques formant, avec la direction circonférentielle (XX'), un angle au moins égal à 15° et au plus égal à 45°et croisés d'une couche de travail à la suivante ;
- ladite armature de travail (60) ayant une largeur axiale LT égale à la largeur axiale de la couche de travail (61) la plus large ;
- l'armature de frettage (70) comprenant au moins deux couches de frettage (71, 72) constituée chacune de renforts métalliques qui font avec la direction circonférentielle (XX'), un angle au plus égal à 2.5°, et sont enrobés dans un mélange élastomérique ;
- l'armature de de frettage (70) comportant une première couche de frettage (71) axialement continue et une deuxième couche de frettage (72) axialement discontinue ;
- la deuxième couche de frettage (72) discontinue étant constituée de deux bandes de frettage (721, 722) symétriques par rapport à un plan équatorial (XZ) du pneumatique passant par le milieu de la bande de roulement (20) et perpendiculaire à l'axe de rotation (YY') dudit pneumatique ;
**caractérisé en ce que** la première couche de frettage (71) a une largeur axiale LF1 au moins égale à 25% et au plus égale à 75% de la largeur axiale LT de l'armature de travail (60), **en ce que** chaque bande de frettage (721, 722) s'étend axialement depuis une extrémité axialement intérieure (I721, I722) jusqu'à une extrémité axialement extérieure (E721, E722) sur une largeur axiale LF2 qui est au moins égale à 10% et au plus égale à 35% de la largeur axiale LF1 de la première couche de frettage (71), **et en ce que** la tension répartie à rupture TR de chaque bande de frettage (721, 722), définie comme le produit du nombre D de renforts par mm par la force à rupture FR de chaque renfort exprimée en daN, est au moins égale à 100 daN/mm.

2. - Pneumatique (1) pour véhicule lourd de type génie civil selon la revendication 1, **dans lequel** l'armature de frettage (70) est radialement positionnée à l'intérieur de l'armature de protection (50).

3. - Pneumatique (1) pour véhicule lourd de type génie civil selon les revendications 1 ou 2, **dans lequel** la première couche de frettage (71) est positionnée radialement à l'extérieur de la couche de travail la plus radialement intérieure (61).

4. - Pneumatique (1) pour véhicule lourd de type génie civil selon la revendication 3, **dans lequel** la deuxième couche de frettage (72) est positionnée radialement à l'extérieur de la première couche de frettage (71) et en contact avec elle.

5. - Pneumatique (1) pour véhicule lourd de type génie civil selon la revendication 3, **dans lequel** la deuxième couche de frettage (72) est positionnée radialement à l'extérieur de la deuxième couche de travail (62) et en contact avec elle.

6. - Pneumatique pour véhicule lourd de type génie civil selon la revendication 3, **dans lequel** la deuxième couche de frettage (72) est positionnée radialement à l'extérieur de l'armature de carcasse (4) et en contact avec elle.

7. - Pneumatique (1) pour véhicule lourd de type génie civil selon les revendications 1 à 6, **dans lequel** la première couche de frettage (71) est constituée par un enroulement circonférentiel d'une nappe de renforts métalliques.

8. - Pneumatique (1) pour véhicule lourd de type génie civil selon les revendications 1 à 7, **dans lequel** chaque bande de frettage (721, 722) de la deuxième couche de frettage (72) est constituée par un enroulement circonférentiel d'une nappe de renforts métalliques.

9. - Pneumatique (1) pour véhicule lourd de type génie civil selon les revendications 1 à 6, **dans lequel** la première couche de frettage (71) est constituée par une juxtaposition axiale de spires jointives d'une bandelette (8), enroulées circonférentiellement, ladite bandelette comprenant au moins 8 et au plus 30 renforts métalliques consécutifs, parallèles entre eux et enrobés dans un mélange élastomérique.

10. - Pneumatique (1) pour véhicule lourd de type génie civil selon les revendications 1 à 9, **dans lequel** chaque bande de frettage (721, 722) de la deuxième couche de frettage (72) est constituée par une juxtaposition axiale de spires jointives d'une bandelette (8), enroulées circonférentiellement, ladite bandelette comprenant au moins 8 et au plus 30 renforts métalliques consécutifs, parallèles entre eux et enrobés dans un mélange élastomérique.

## Patentansprüche

1. Reifen (1) für Tiefbau-Schwerlastfahrzeug, umfassend:
- eine Scheitelbewehrung (30) radial innen zu einem Laufstreifen (20) und radial außen zu einer Karkassenbewehrung (40);
- wobei die Scheitelbewehrung (30) eine Schutzbewehrung (50), eine Arbeitsbewehrung (60) und eine Umreifungsbewehrung (70) umfasst;
- wobei die radial äußerste Schutzbewehrung (50) in der Scheitelbewehrung (30) mindestens eine Schutzschicht (51, 52) umfasst, wobei die Schutzschicht (51, 52) Metallverstärkungen umfasst, die mit einer Umfangsrichtung (XX'), die zum Umfang des Reifens tangential verläuft, einen Winkel von mindestens gleich 10° bilden;
- wobei die Arbeitsbewehrung (60) mindestens zwei Arbeitsschichten (61, 62) umfasst, wobei jede Arbeitsschicht (61, 62) Metallverstärkungen umfasst, die mit der Umfangsrichtung (XX') einen Winkel von mindestens gleich 15° und höchstens gleich 45° bilden und von einer Arbeitsschicht zur nächsten gekreuzt sind;
- wobei die Arbeitsbewehrung (60) eine axiale Breite LT aufweist, die gleich der axialen Breite der breitesten Arbeitsschicht (61) ist;
- wobei die Umreifungsbewehrung (70) wenigstens zwei Umreifungsschichten (71, 72) umfasst, die jeweils von Metallverstärkungen gebildet sind, die mit der Umfangsrichtung (XX') einen Winkel von höchstens gleich 2,5° bilden und in einer Elastomermischung eingebettet sind;
- wobei die Umreifungsbewehrung (70) eine erste, axial durchgehende Umreifungsschicht (71) und eine zweite, axial unterbrochene Umreifungsschicht (72) aufweist;
- wobei die zweite, unterbrochene Umreifungsschicht (72) von zwei Umreifungsbändern (721, 722) gebildet ist, die zu einer Äquatorialebene (XZ) des Reifens symmetrisch sind, die durch die Mitte des Laufstreifens (20) und senkrecht zur Drehachse (YY') des Reifens verläuft; **dadurch gekennzeichnet, dass** die erste Umreifungsschicht (71) eine axiale Breite LF1 von wenigstens gleich 25 % und höchstens gleich 75 % der axialen Breite LT der Arbeitsbewehrung (60) aufweist, dadurch, dass sich jedes Umreifungsband (721, 722) axial von einem axial inneren Ende (I721, I722) bis zu einem axial äußeren Ende (E721, E722) über eine axiale Breite LF2 erstreckt, die wenigstens gleich 10 % und höchstens gleich 35 % der axialen Breite LF1 der ersten Umreifungsschicht (71) ist, und dadurch, dass die verteilte Reißspannung TR jedes Umreifungsbands (721, 722), die als das Produkt der Anzahl D von Verstärkungen pro mm mal die in daN ausgedrückte Reißkraft FR jeder Verstärkung definiert ist, wenigstens gleich 100 daN/mm ist.

2. Reifen (1) für Tiefbau-Schwerlastfahrzeug nach Anspruch 1, wobei die Umreifungsbewehrung (70) radial innerhalb von der Schutzbewehrung (50) positioniert ist.

3. Reifen (1) für Tiefbau-Schwerlastfahrzeug nach den Ansprüchen 1 oder 2, wobei die erste Umreifungsschicht (71) radial außerhalb von der radial innersten Arbeitsschicht (61) positioniert ist.

4. Reifen (1) für Tiefbau-Schwerlastfahrzeug nach Anspruch 3, wobei die zweite Umreifungsschicht (72) radial außerhalb von der ersten Umreifungsschicht (71) und in Kontakt mit ihr positioniert ist.

5. Reifen (1) für Tiefbau-Schwerlastfahrzeug nach Anspruch 3, wobei die zweite Umreifungsschicht (72) radial außerhalb von der zweiten Arbeitsschicht (62) und in Kontakt mit ihr positioniert ist.

6. Reifen für Tiefbau-Schwerlastfahrzeug nach Anspruch 3, wobei die zweite Umreifungsschicht (72) radial außerhalb von der Karkassenbewehrung (4) und in Kontakt mit ihr positioniert ist.

7. Reifen (1) für Tiefbau-Schwerlastfahrzeug nach den Ansprüchen 1 bis 6, wobei die erste Umreifungsschicht (71) von einer Umfangswicklung einer Lage aus Metallverstärkungen gebildet ist.

8. Reifen (1) für Tiefbau-Schwerlastfahrzeug nach den Ansprüchen 1 bis 7, wobei jedes Umreifungsband (721, 722) der zweiten Umreifungsschicht (72) von einer Umfangswicklung einer Lage aus Metallverstärkungen gebildet ist.

9. Reifen (1) für Tiefbau-Schwerlastfahrzeug nach den Ansprüchen 1 bis 6, wobei die erste Umreifungsschicht (71) von einer axialen Nebeneinanderanordnung aneinander liegender Windungen eines Streifens (8) gebildet ist, die in Umfangsrichtung gewickelt sind, wobei der Streifen wenigstens 8 und höchstens 30 aufeinanderfolgende Metallverstärkungen umfasst, die zueinander parallel verlaufen und in einer Elastomermischung eingebettet sind.

10. Reifen (1) für Tiefbau-Schwerlastfahrzeug nach den Ansprüchen 1 bis 9, wobei jedes Umreifungsband (721, 722) der zweiten Umreifungsschicht (72) von einer axialen Nebeneinanderanordnung aneinander liegender Windungen eines Streifens (8) gebildet ist, die in Umfangsrichtung gewickelt sind, wobei der Streifen wenigstens 8 und höchstens 30 aufeinanderfolgende Metallverstärkungen umfasst, die zueinander parallel verlaufen und in einer Elastomermischung eingebettet sind.

## Claims

1. - Tyre (1) for a heavy-duty vehicle of construction plant type, comprising:
- a crown reinforcement (30), radially on the inside of a tread (20) and radially on the outside of a carcass reinforcement (40);
- the crown reinforcement (30) comprising a protective reinforcement (50), a working reinforcement (60) and a hoop reinforcement (70);
- the protective reinforcement (50), which is radially outermost in the crown reinforcement (30), comprising at least one protective layer (51, 52), the protective layer (51, 52) comprising metal reinforcers that form an angle at least equal to 10° with a circumferential direction (XX') tangential to the circumference of the tyre;
- the working reinforcement (60) comprising at least two working layers (61, 62), each working layer (61, 62) comprising metal reinforcers that form an angle at least equal to 15° and at most equal to 45° with the circumferential direction (XX') and are crossed from one working layer to the next;
- said working reinforcement (60) having an axial width LT equal to the axial width of the widest working layer (61);
- the hoop reinforcement (70) comprising at least two hooping layers (71, 72), each made up of metal reinforcers that form an angle at most equal to 2.5° with the circumferential direction (XX'), and are coated in an elastomeric compound;
- the hoop reinforcement (70) comprises an axially continuous first hooping layer (71) and an axially discontinuous second hooping layer (72);
- the discontinuous second hooping layer (72) consists of two hooping strips (721, 722) that are symmetrical with respect to an equatorial plane (XZ) of the tyre passing through the middle of the tread (20) and perpendicular to the axis of rotation (YY') of said tyre,
**characterized in that** the first hooping layer (71) has an axial width LF1 at least equal to 25% and at most equal to 75% of the axial width LT of the working reinforcement (60), **in in that** each hooping strip (721, 722) extends axially from an axially interior end (1721, 1722) as far as an axially exterior end (E721, E722) over an axial width LF2 which is at least equal to 10% and at most equal to 35% of the axial width LF1 of the first hooping layer (71), **and in that** the distributed tension at break TR of each hooping strip (721, 722), defined as being the product of the number D of reinforcers per mm times the force at break FR of each reinforcer expressed in daN, is at least equal to 100 daN/mm.

2. - Tyre (1) for a heavy-duty vehicle of construction plant type according to Claim 1, **wherein** the hoop reinforcement (70) is positioned radially on the inside of the protective reinforcement (50).

3. - Tyre (1) for a heavy-duty vehicle of construction plant type according to Claims 1 or 2, **wherein** the first hooping layer (71) is positioned radially on the outside of the radially innermost working layer (61).

4. - Tyre (1) for a heavy-duty vehicle of construction plant type according to Claim 3, **wherein** the second hooping layer (72) is positioned radially on the outside of the first hooping layer (71) and in contact therewith.

5. - Tyre (1) for a heavy-duty vehicle of construction plant type according to Claim 3, **wherein** the second hooping layer (72) is positioned radially on the outside of the second working layer (62) and in contact therewith.

6. - Tyre (1) for a heavy-duty vehicle of construction plant type according to Claim 3, **wherein** the second hooping layer (72) is positioned radially on the outside of the carcass reinforcement (4) and in contact therewith.

7. - Tyre (1) for a heavy-duty vehicle of construction plant type according to Claims 1 to 6, **wherein** the first hooping layer (71) is made up of a circumferential winding of a ply of metal reinforcers.

8. - Tyre (1) for a heavy-duty vehicle of construction plant type according to Claims 1 to 7, **wherein** each hooping strip (721, 722) of the second hooping layer (72) is made up of a circumferential winding of a ply of metal reinforcers.

9. - Tyre (1) for a heavy-duty vehicle of construction plant type according to Claims 1 to 6, **wherein** the first hooping layer (71) is made up of an axial juxtaposition of contiguous turns of a thin strip (8), wound circumferentially, said thin strip comprising at least 8 and at most 30 consecutive metal reinforcers which are mutually parallel and coated in an elastomeric compound.

10. - Tyre (1) for a heavy-duty vehicle of construction plant type according to Claims 1 to 9, **wherein** each hooping strip (721, 722) of the second hooping layer (72) is made up of an axial juxtaposition of contiguous turns of a thin strip (8), wound circumferentially, said thin strip comprising at least 8 and at most 30 consecutive metal reinforcers which are mutually parallel and coated in an elastomeric compound.
